# EUROPEAN PATENT APPLICATION

(11) **EP 2 537 784 A1**
(43) Date of publication of application: **26.12.2012**
(21) Application number: 12002795.8
(22) Date of filing: 20.04.2012
(51) Int. Cl.: B65G 49/06

(54) **Apparatus for handling glass panels**

(30) Priority: 24.06.2011 IT MI20111150
(71) Applicant: Macotec S.R.L., 23010 Rogolo, (SO) (IT)
(72) Inventor: Colli, Maurizio, 23019 Traona (Sondrio) (IT); Ferrari, Ivan, 22069 Rovellasca (Como) (IT)
(74) Representative: Forattini, Amelia

(57) **Abstract**

An apparatus for handling glass panels, characterized in that it comprises a clamp means supported by a handling structure and adapted to pick up automatically a glass panel from an end station of a cutting line and to deliver automatically the panel to an unloading station; in the end station, the glass panel is arranged in a substantially vertical position in order to be gripped by the clamp means; the apparatus furthermore comprises a means for detecting the size of the panel to be picked up in the end station.

## Description

The present invention relates to an apparatus for handling glass panels.

Machines for cutting laminated glass are known in which all the functions are automated: loading of the sheet, movement, rotations, discharge of the waste, conveyance to the end of the line of the cut glass and vertical arrangement thereof.

The term "laminated glass" here means a glass panel constituted by two glass sheets which are joined to each other by means of a PVB film.

The only function that has not yet been automated in those machines is the pick-up of the finished product, which must be picked up by an operator for unloading.

There is, therefore, the need to automatically unload the finished glass panels, i.e., the panels cut to size, from the machine and deposit them on the stands in a completely automatic manner without requiring an operator.

Another problem to be solved, in an automatic unloading system, is that it is necessary to be able to use the movable stands that are already present in the glassworks without having to purchase new movable stands.

The stands normally used in glassworks to store glass panels are of the A-shaped or L-shaped movable type.

Also, depending on cutting optimization and on the program that manages the filling of the stands, the glass panels might exit from the machine with a certain orientation and might have to be deposited on the stands after being rotated through 90°, in order to fill the stand in the best possible way or more simply to place the glass panel in a position, for example with the longer side parallel to the ground, which ensures the stability of said glass panel during the handling of the stand.

Another characteristic that is required of an automatic unloading system is maximum flexibility in operation, because there is an extremely high variability of the measurements of the cut glass panels and of their thicknesses.

Systems capable of unloading automatically a cutting line for laminated glass panels are not known; however, systems for the automatic unloading of lines for cutting monolithic glass panels are known.

Those conventional systems can pick up the cut glass from the line and load it automatically onto stands, which are exclusively of the so-called harp type.

The systems for loading monolithic glass panels of the known type use substantially lower rollers or grippers which act on the lower edge of the glass, which is already arranged vertically.

These are in any case systems which are very complicated and large and for very large production runs.

Regardless of the automatic unloading of the glass panels at the end of the line, the handling of the glass panels, be they complete sheets or portions thereof, is currently performed by means of suckers, both for automatic loading and for manual loading, and with grippers, with exclusively manual operation.

The aim of the present invention is to provide an apparatus for handling glass panels which overcomes the drawbacks of the cited prior art.

Within the scope of this aim, an object of the invention is to provide an apparatus for unloading laminated glass panels originating from a cutting line in a completely automatic manner.

A further object of the invention is to provide an apparatus which is capable of picking up the panels, at the end of the cutting line, regardless of their dimensions and of the position in which they are arranged.

A further object is to provide an apparatus which is capable of rotating the panels, if required by the management program.

Another object is to provide an apparatus that is capable of depositing them on any type of stand.

Another object of the present invention is to provide an apparatus which, by virtue of its particular constructive characteristics, is capable of giving the greatest assurances of reliability and safety in use.

This aim and other objects which will become better apparent hereinafter are achieved by an apparatus for handling glass panels, **characterized in that** it comprises a clamp means supported by a handling structure and adapted to pick up automatically a glass panel from an end station of a cutting line and to deliver automatically the glass panel to an unloading station; the glass panel being arranged, at the end station, in a substantially vertical position in order to be gripped by the clamp means; the apparatus further comprising means for detecting the size of the panel to be picked up in the end station.

Further characteristics and advantages will become better apparent from the description of preferred but not exclusive embodiments of the invention, illustrated by way of non-limiting example in the accompanying drawings, wherein:
Figure 1 is a side view of an apparatus for handling glass panels according to the present invention, applied at the end of a cutting line;
Figure 2 is a top view of the apparatus of the preceding figure;
Figure 3 is a side view of a handling apparatus according to a further aspect of the invention, applied to the end of a cutting line;
Figure 4 is a top view of the apparatus of the preceding figure;
Figure 5 is a side view of a handling apparatus according to a further aspect of the invention, applied to the end of a cutting line;
Figure 6 is a top view of the apparatus of the preceding figure;
Figure 7 is a side view of a handling apparatus according to a further aspect of the invention, applied to the end of a cutting line;
Figure 8 is a top view of the apparatus of the preceding figure;
Figure 9 is a side view of a handling apparatus, according to a further aspect of the invention, applied to the end of a cutting line;
Figure 10 is a top view of the apparatus of the preceding figure;
Figure 11 is a perspective view of an A-shaped movable stand;
Figure 12 is a perspective view of an L-shaped movable stand;
Figure 13 is a schematic front view of the clamp during the handling of a panel on a stand;
Figure 14 is a top view of the stand of the preceding figure;
Figure 15 is a sectional side view of the clamp of the embodiment provided with two movable jaws;
Figure 16 is a sectional side view of the clamp of the embodiment provided with one movable jaw;
Figures 17 and 18 are side views of the operation of the clamp provided with an oscillating movement during the grip of a panel;
Figures 19-21 are side views of the operation of the clamp, which does not oscillate and is provided with an anti-tipping device, during the step of release for the deposition of a panel on the stand;
Figures 22-24 are side views of the operation of the clamp, which does not oscillate, provided with another type of anti-tipping device, in the step of release for the deposition of a panel;
Figures 25-27 are side views of the operation of the clamp without the anti-tipping device but provided with an oscillating motion during the step of release for the deposition of a panel;
Figures 28-29 are side views of the vertical motion of the clamp, by means of a pantograph system;
Figures 30 and 31 are side views of the extending motion of a tipping plane of the glass panels;
Figure 32 is a side view of a rotation device;
Figure 33 is a front view of the rotation device.

With reference to the cited figures, the apparatus for handling glass panels according to the invention, generally designated by the reference numeral 1, essentially comprises a clamp means 2, which is supported by a handling structure 3 and is adapted to pick up a glass panel 100 from an end station 4 of a cutting line 5 and to move the glass panel 100 to an unloading station 6, which is constituted essentially by one or more stands.

The glass panel 100 is arranged in a substantially vertical position in order to be gripped by the clamp means 2, where the expression "substantially vertical" means that the plane of the panel is inclined with respect to the horizontal plane by an angle that is close to 90°.

In practice, the panel 100 lies on a tilting surface 7 or other adapted structure provided on the line 5 with an angle of approximately 83°, in order to prevent the panel from tipping.

The apparatus 1 comprises means for detecting the dimensions of the panel 100 to be picked up, for example by reading the edge with photocells.

The handling structure 3 supports the clamp means 2 so that they can perform a combined rotary and translational motion, i.e., a rotation about their own vertical axis Z and a translation on the horizontal plane.

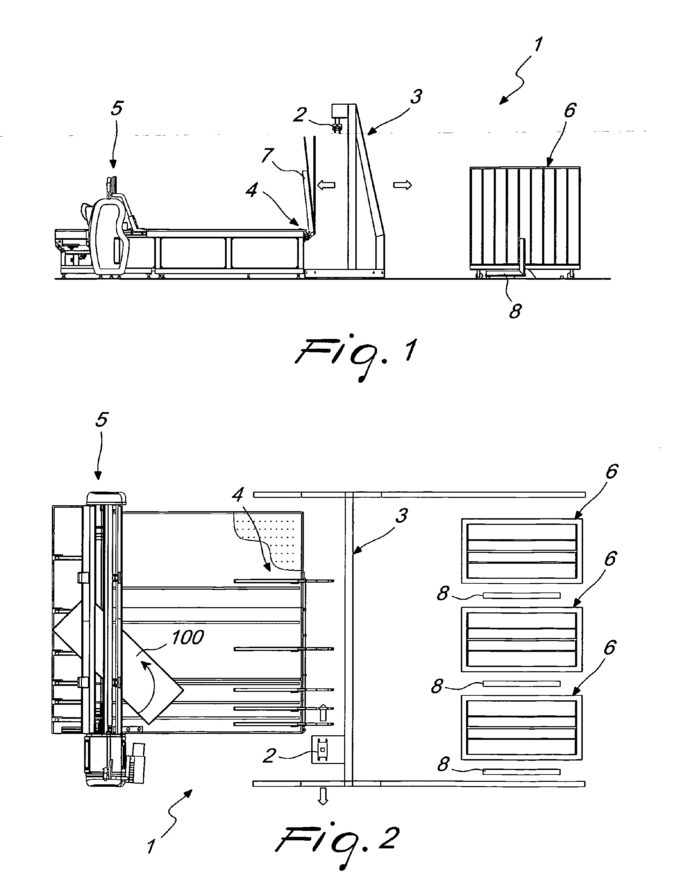

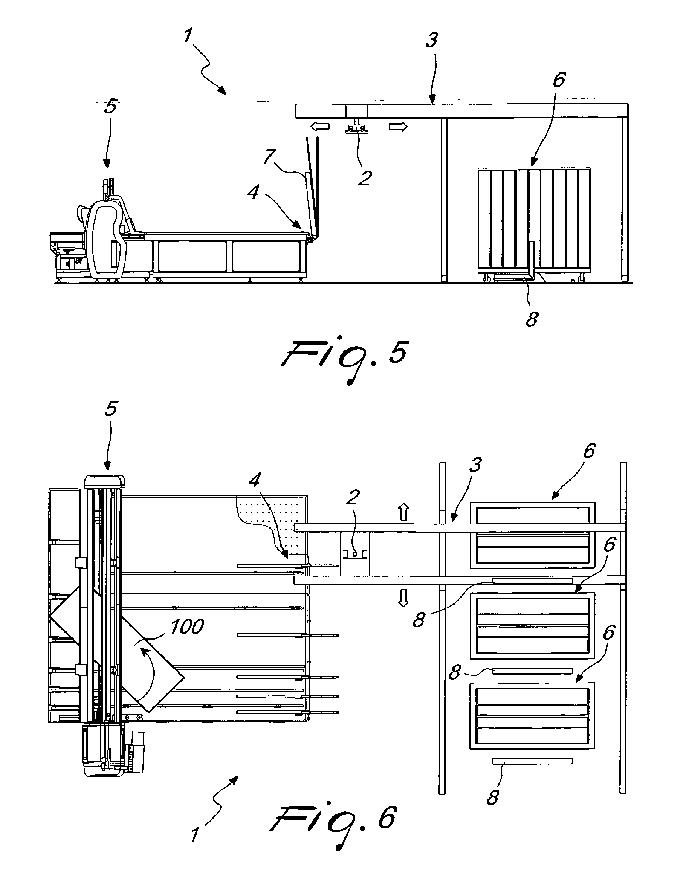

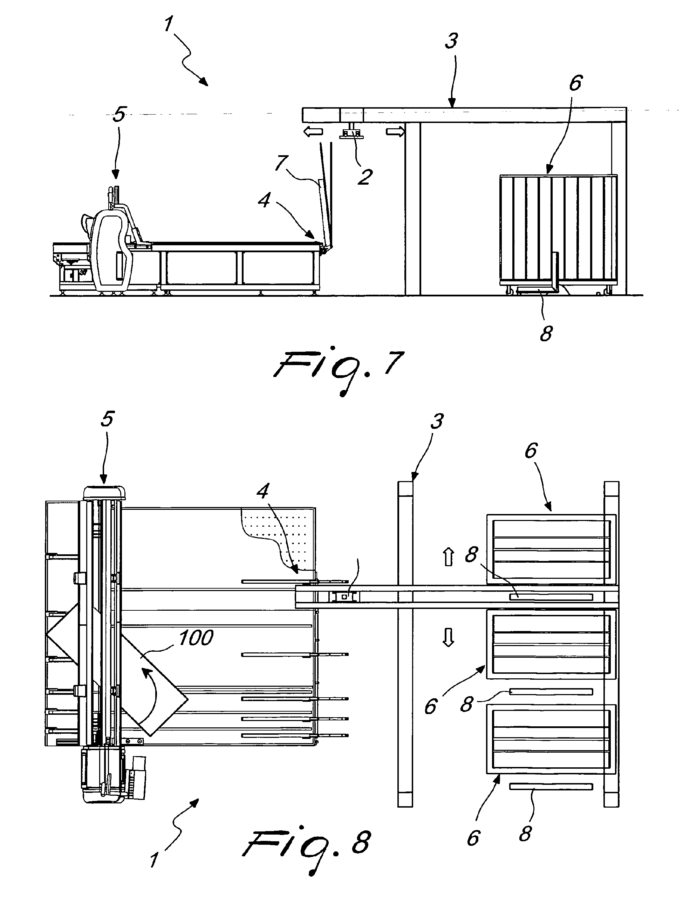

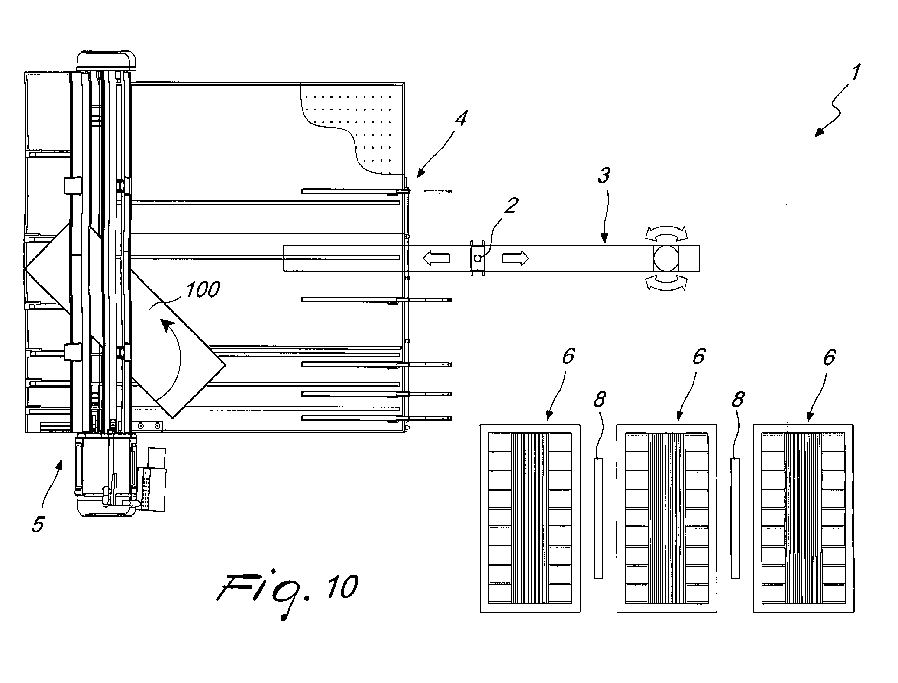

The handling structure 3 can assume various shapes according to the requirements. Figures 1-10 illustrate by way of example five different embodiments of the handling structure 3.

In general, the handling structure 3 has a frame which can move, for example on rails, so as to shift from a position for picking up the panel to an unloading position, and the clamp means can move with respect to the frame, in a manner which is similar to a bridge crane.

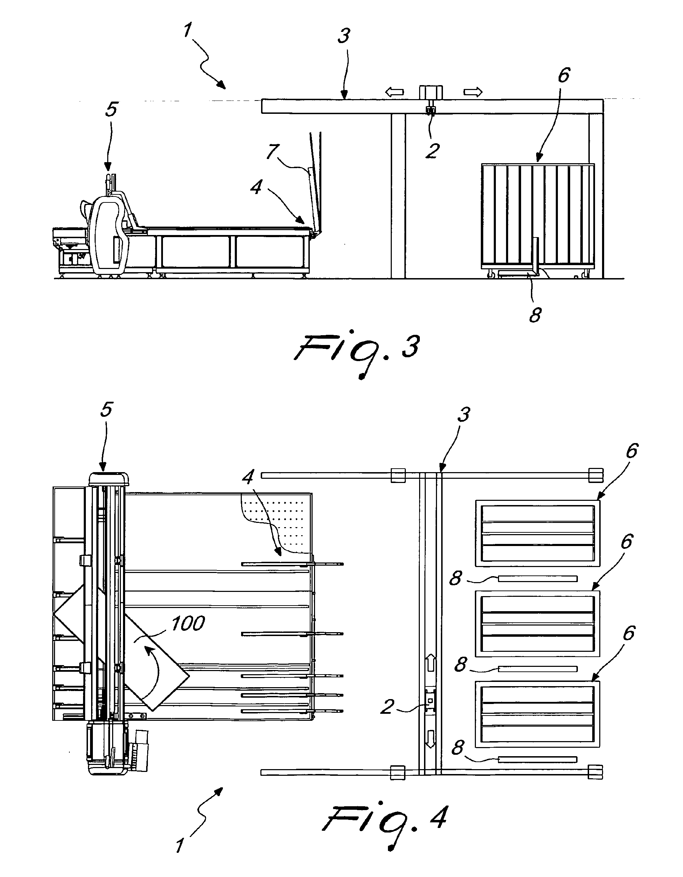

In the embodiments shown in Figures 3-8, the handling structure 3 is constituted by a lower fixed part on which an upper movable part which supports the clamp means 2 moves.

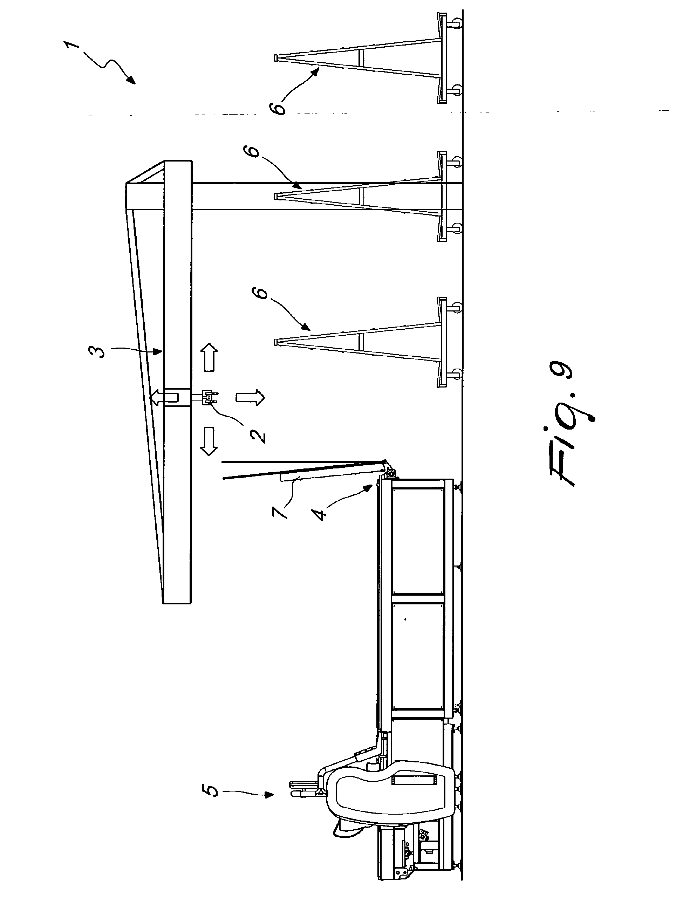

In the embodiment shown in Figures 9-10, the handling structure 3 is constituted by a rotating post which is provided with an arm on which the clamp means 2 moves.

The clamp means 2 substantially comprises a clamp body 21 which is associated with a device 22 for fixing the clamp body to the handling structure 3.

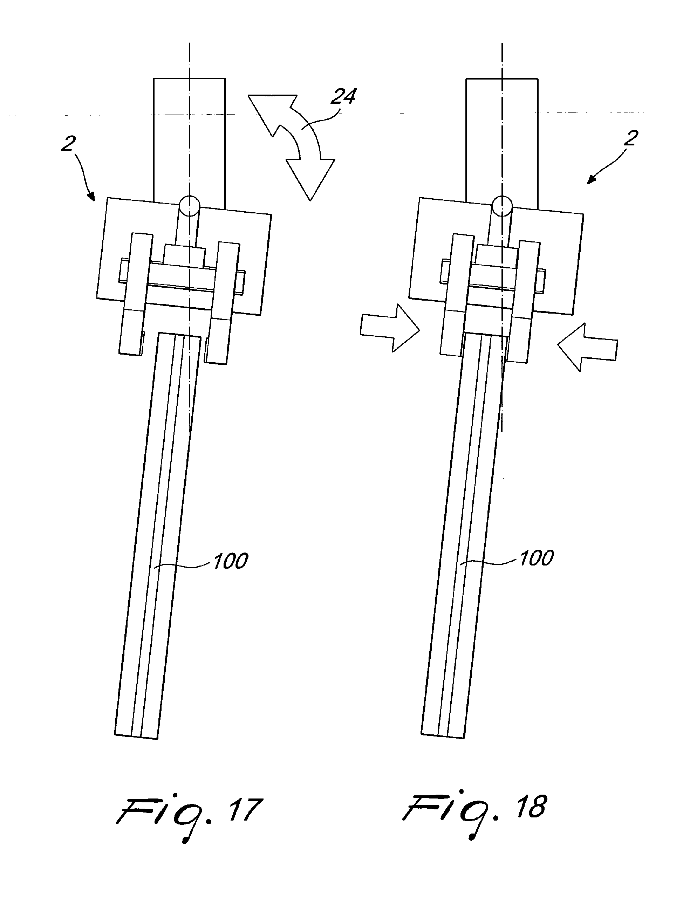

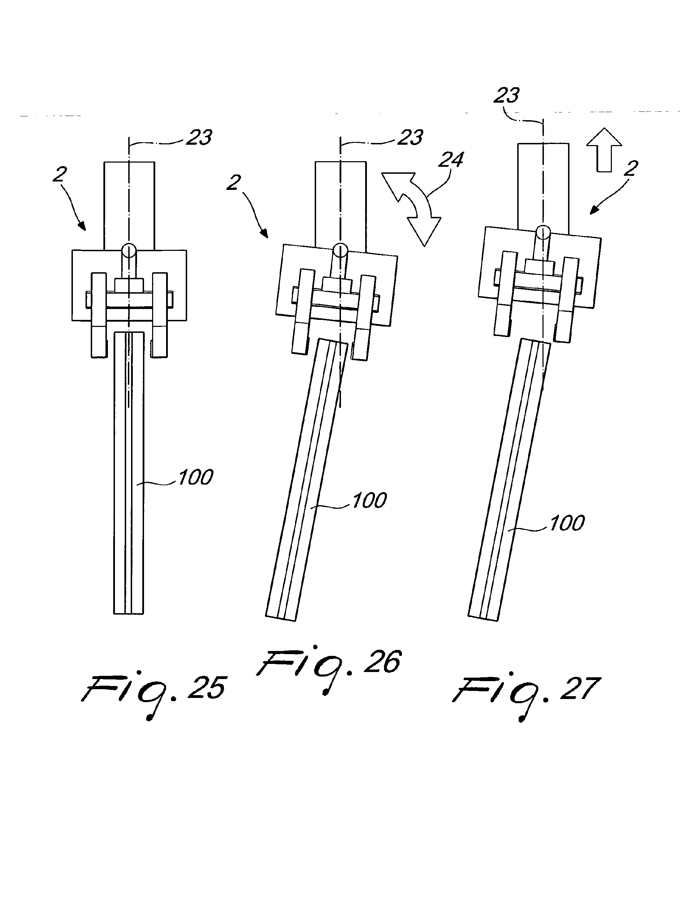

The fixing device 22 allows the movement of the clamp body 21 along the three perpendicular axes as well as rotation about its own vertical axis 23 and optionally a lateral oscillation, designated by the reference numeral 24 in Figures 17 and 26.

The clamp body 21 has a glass panel gripping device which is constituted by a pair of jaws 25 which allow to grip the glass panel along its upper edge and allow a sliding of the clamp with respect to the upper edge of the glass panel so as to be able to always pick it up in an "axial" position.

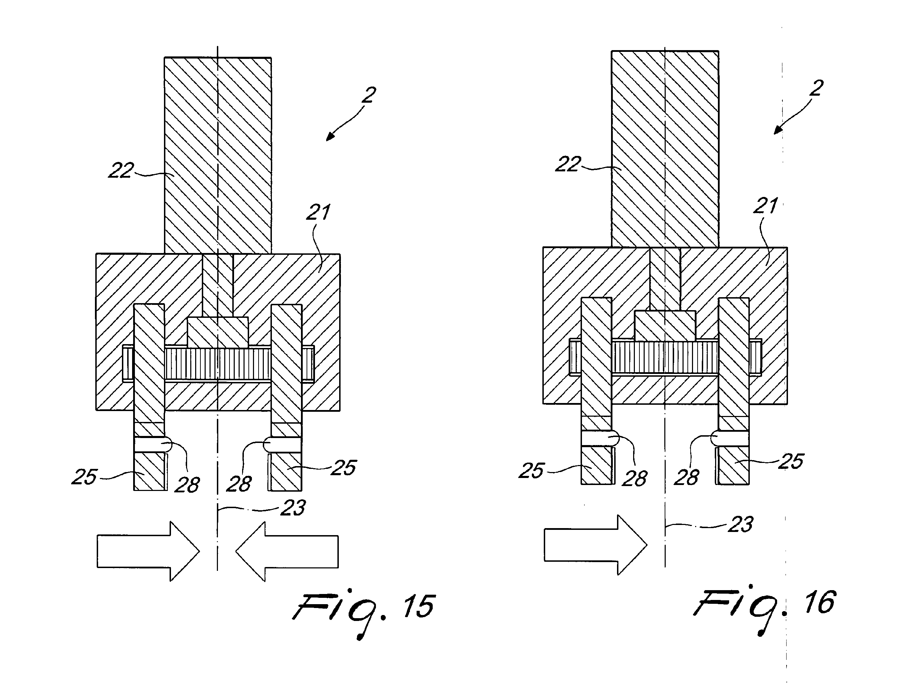

The jaws 25 can both be movable, as shown schematically in Figure 15, or one can be fixed and the other one can be movable, as shown schematically in Figure 16.

The jaws 25 can open and close with a linear motion, with a rotary motion or with a combined rotary and translational motion.

As mentioned above, the clamp body 21 can also be provided with an oscillating motion which allows to tilt it in order to better adapt to the inclination of the panel prior to gripping it, as shown schematically in Figures 17 and 18.

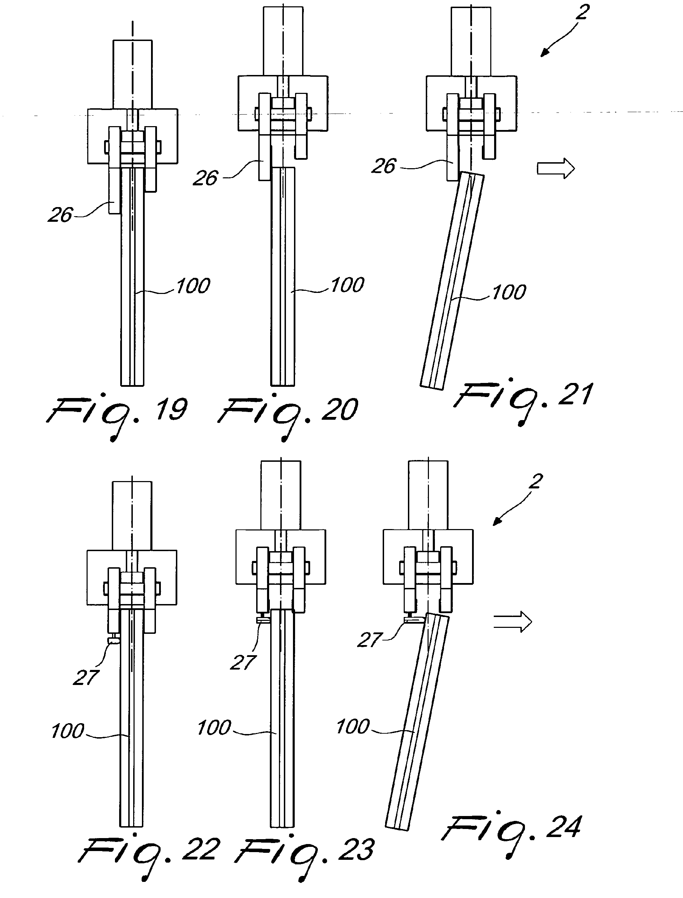

The clamp may comprise an anti-tipping device, shown in Figures 19-24, in order to ensure the deposition of the panel: the panel 100 is in fact arranged vertically and must then be rested against the shoulder of a stand, or against the other glass panels, which are inclined.

Figures 19-21 illustrate an anti-tipping device which is constituted by an extension 26 of one of the jaws or of a movable element 27 which is applied to a jaw 25, as shown in Figures 22-24.

The anti-tipping device is not required if the clamp oscillates, because the glass panel is released by utilizing an adapted combination of movements along the vertical and horizontal axes, as shown schematically in Figures 25-27.

The jaws 25 are covered, on their inner sides, with material that allows a good adherence to the glass panel.

Since a certain sliding of the glass panel with respect to the jaws is required during grip and release, the inner part of each jaw 25 is provided with a sliding system, which is arranged in its upper part and intervenes during the step of horizontal translation of the clamp and is outside of the working area when the clamp grips in order to ensure its clamping outside of the work volume when the clamp achieves grip in order to ensure its grip.

The sliding system, for example, can be constituted by a portion made of antifriction material 28, which is visible in Figures 15 and 16.

The antifriction material constitutes the constructively simplest system, but as an alternative it is possible to use rolling devices, such as wheels, etcetera.

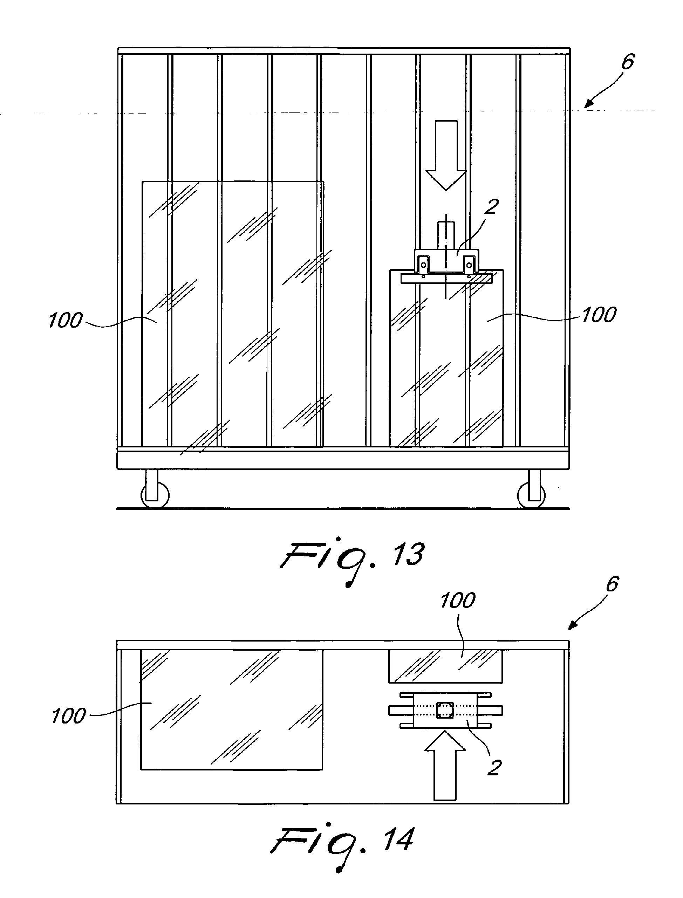

The clamp means according to the present invention occupies a small space and for this reason the clamp body can be inserted between the stands 6, which can be positioned even very close to each other, and allows to load the glass panels on multiple rows which have even different depths, as shown schematically in Figures 13 and 14.

The clamp means thus built also has a low weight and does not require an extremely strong supporting structure and allows rapid movement.

In the presence of particularly low panels, and when using a classic handling along the vertical axis, the clamp means should have a very long vertical stroke in order to be able to descend to the level required to pick up the panel 100.

When the clamp then rises to pick up a high panel, the vertical axis would lie well beyond the handling structure 3, creating possible problems in case of low industrial structures or with existing overhead handling systems.

The advantages provided by the construction of the clamp means according to the present invention, reduced weight and reduced space occupation, make it possible to provide the fixing device 22 of the body 21 in different ways.

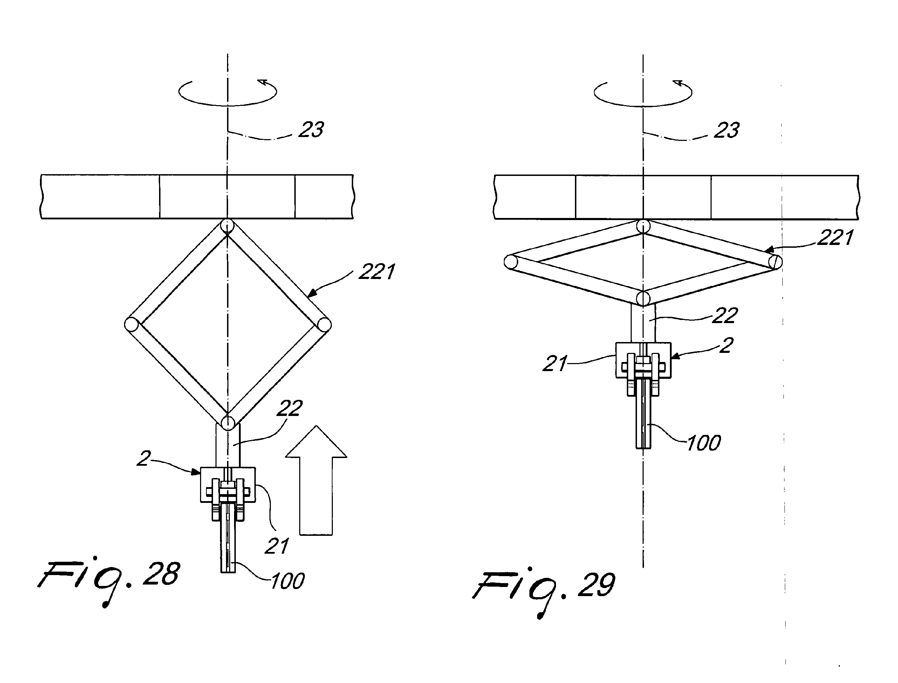

For example, the fixing device 22 can comprise a pantograph 221, illustrated in Figures 28 and 29, which reduces the need for an excessive extension of the vertical axis.

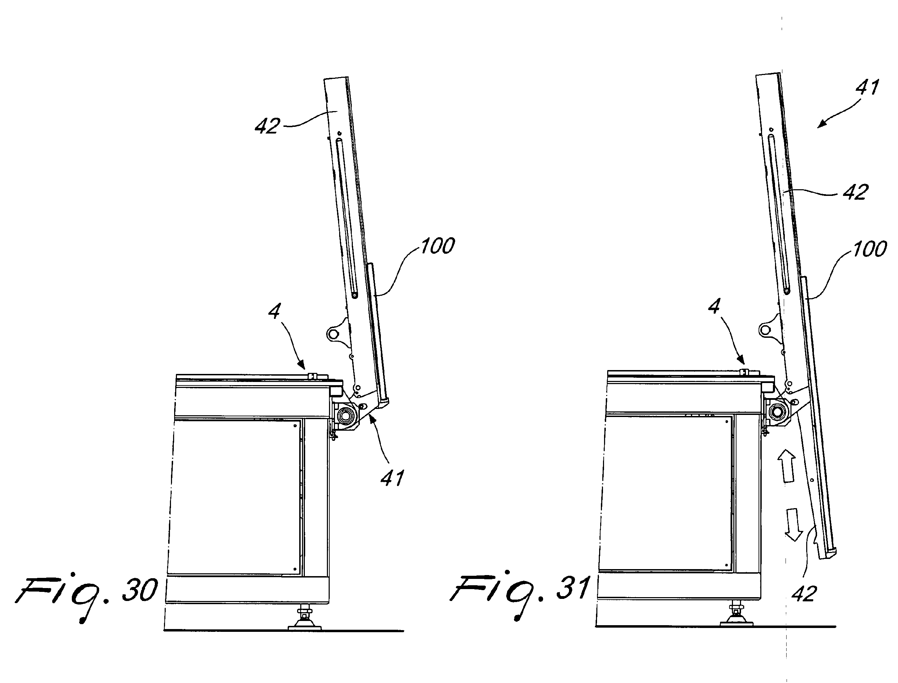

Another system for avoiding a long stroke of the vertical axis of the clamp body is shown in Figures 30 and 31: a device 41 for unloading the panels is provided with extensible arms 42, which can adjust automatically according to the height of the panel 100 to be picked up, since the dimensions of the panel are known by virtue of the detection means, so as to limit the vertical stroke of the clamp body.

The apparatus also comprises a rotation device 8, which is capable of rotating the panel 100 through 90° on a vertical plane, when said panel is on the unloading device 41 with an orientation that is different from the one required for deposition on the stand 6.

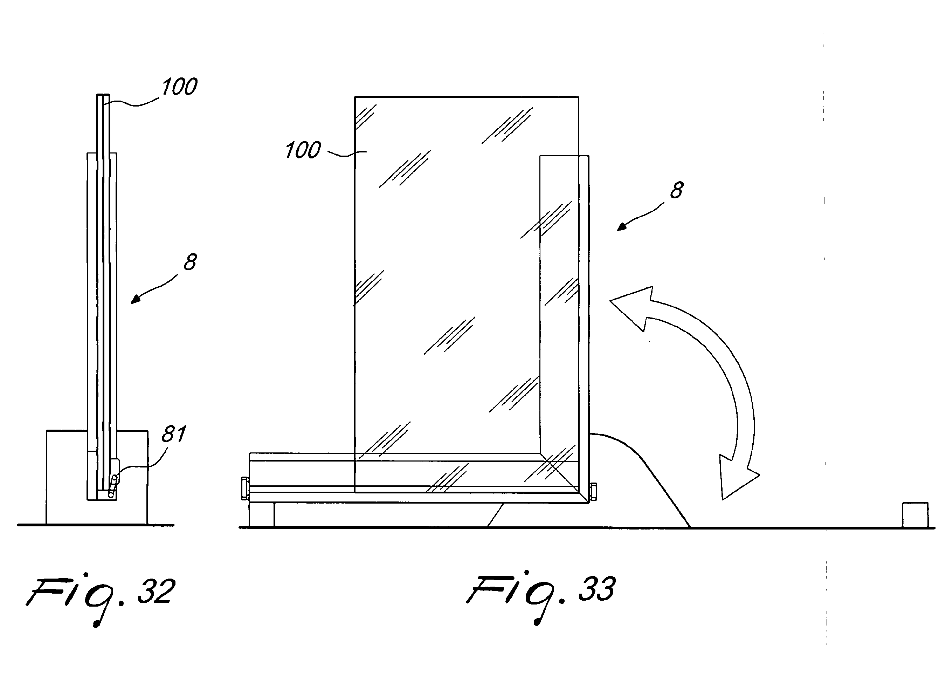

The rotation device 8, shown in Figures 32 and 33, has a horizontal rotation axis and the system 81 for locking the panel in order to allow high rotation rates.

The panel is blocked only at one side or at most two sides, so as to leave free the other two in order to allow the clamp means 2 to release and pick-up the panel.

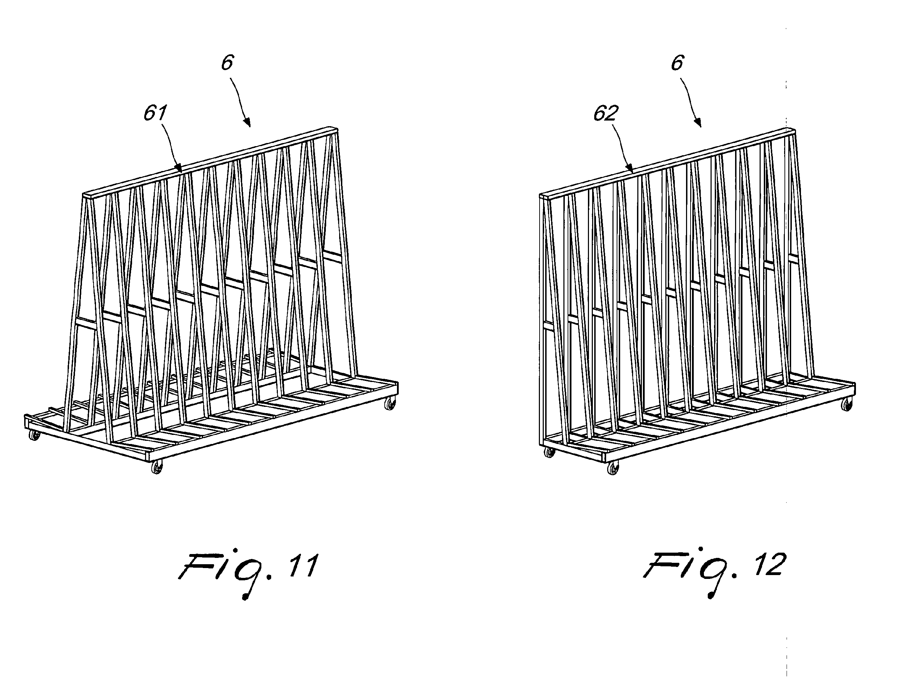

The unloading station 6 is constituted by a movable stand which can be of at least two types: an A-shaped stand 61, shown in Figure 11, on which it is possible to load panels on both sides, and an L-shaped stand 62, shown in Figure 12, on which the panels can be loaded on a single side.

Regardless of their shape, these stands must allow loading with a row of glass panels or with multiple rows, as a function of how the management software optimizes everything.

All the types of stand are preferably movable by means of their own wheels or can be lifted and moved with a transpallet.

The loading stations, i.e., the areas reserved for parking the stands, are equipped to ensure that the stands to be loaded, once arranged in the island, are locked to the ground, so as to prevent an accidental movement thereof which might hinder the correct deposition of the glass panels, and are recognized automatically, by means of sensors or of microchips inserted in the structure, in their characteristic dimensions, in order to check that the stand to be loaded actually corresponds to the stand expected by the management software.

The apparatus according to the present invention is designed particularly to handle laminated glass, which is very strong and tough and can be picked up by means of a type of clamp which, with respect to suckers, offers several advantages.

A clamp means is less bulky with respect to suckers and the same device can pick up panels having different dimensions, both small ones and large ones, differently from suckers, which must be structured and positioned for each size differently and for which it is necessary to adjust the vacuum system ad hoc.

A clamp means is in general less expensive and also allows the handling of "low-E" glass panels, which cannot be picked up frontally due to the special coating.

The clamp means 2 picks up the panel 100 at its edge and at the axis of symmetry of the panel so as to ensure that the panel is balanced during subsequent handling.

The clamp means can perform a rotation through at least 90° about its own vertical axis 23 in order to be able to position the panels on the stands 6 even if they are oriented differently with respect to the output of the glass panels.

Since the tilting element 41 is formed by a certain number of arms having a certain height, the center of gravity of the panel might coincide with one of these arms: when this condition occurs, it is evident that the clamp cannot enter between the glass panel and the arms for the pick-up operation.

When this occurs, the pick-up cycle occurs in the following manner.

The clamp enters between the arms of the tilting element where the center distance allows this and engages the panel without locking it, moving it in a vertical position by the extent sufficient to allow the rear jaw to enter between the panel and the tilting element and translating along the panel until it reaches its axis of symmetry.

Since the jaws 25 are covered internally with material that allows a good adherence to the glass panel, this sliding operation might be hindered, if not even impossible, and therefore the jaws are provided with the sliding system described above, which is constituted by a portion made of antifriction material or other sliding devices, such as wheels, etcetera.

The sliding system intervenes during the step of horizontal translation of the clamp and is outside of the working area when the clamp grips in order to ensure its clamping.

The clamp means 2 picks up the panel from the tilting element 41 and deposits it on the rotation device 8, if necessary, and then releases the panel.

The rotation device 8 rotates the glass through 90° and the clamp means 2 picks up the panel again and deposits it on the stand 6.

The automation of the entire process for picking up the glass panel from the end station of the line to the position for deposition on the stand or stands is ensured by the fact that the dimensions and position of the cut glass panel are both known.

The dimensions in fact originate from the sheet optimization software, while the position is linked to the fact that the machine, in order to perform cutting and all the handling, always aligns the panel with a zero line. The position of deposition of the glass panels on the stands is also known. The data related to the type and size of the stands are in fact entered in the optimization software, which already by organizing the arrangement of the cut panels on the stands optimizes the sheet so that the output sequence of the panels matches the arrangement of the glass panels on the stands planned originally.

The stands are arranged in specific parking areas which are provided with adapted sensors and with ground locking elements. Once the stands have been positioned, the sensors recognize their presence and also the type of stand. This data item, read by the sensor, is compared with the one entered in the optimizer and, if they coincide, the automatic pick-up and unloading operations can begin.

In practice it has been found that the invention achieves the intended aim and objects, providing an apparatus for handling glass panels that is capable of picking up automatically a cut glass panel from an automated cutting line and of arranging it in loading stations which are constituted typically by A-shaped or L-shaped trolleys.

This application claims the priority of Italian Patent Application No. M12011A001150, filed on June 24, 2011, the subject matter of which is incorporated herein by reference.

## Claims

1. An apparatus for handling glass panels, **characterized in that** it comprises a clamp means supported by a handling structure and adapted to pick up automatically a glass panel from an end station of a cutting line and to deliver automatically said glass panel to an unloading station; said glass panel being arranged, in said end station, in a substantially vertical position in order to be gripped by said clamp means; said apparatus further comprising a means for detecting the size of said panel to be picked up in said end station.

2. The apparatus according to claim 1, **characterized in that** said handling structure supports said clamp means so that it can perform a combined rotary and translational motion, i.e., a rotation about its own vertical axis and a translation on the horizontal plane.

3. The apparatus according to claim 1 or 2, **characterized in that** said handling structure has a frame which can move in such a manner as to shift from a position for picking up the panel to an unloading position and said clamp means can move with respect to said frame.

4. The apparatus according to one or more of the preceding claims, **characterized in that** said clamp means comprises a clamp body associated with a device for fixing said clamp body to said handling structure; said fixing device allows the movement of said clamp body along the three perpendicular axes and a rotation about its own vertical axis.

5. The apparatus according to one or more of the preceding claims, **characterized in that** said fixing device allows a lateral oscillation of said clamp body.

6. The apparatus according to one or more of the preceding claims, **characterized in that** said clamp body has a glass panel grip device which is constituted by a pair of jaws which allow a sliding of the clamp with respect to the upper edge of the glass panel so as to be able to pick it up always in an axial position; said jaws can be both movable, or one can be fixed and the other one movable; said jaws open and close with a linear motion, with a rotary motion or with a combined rotary and translational motion.

7. The apparatus according to one or more of the preceding claims, **characterized in that** said clamp body comprises an anti-tipping device in order to ensure the deposition of the panel vertically and then be rested against the shoulder of a stand, or against other panels, which are inclined.

8. The apparatus according to one or more of the preceding claims, **characterized in that** said jaws are covered, on the inner sides, with material which allows a good adherence to the glass panel; the inner part of each jaw is further provided with a sliding system, which intervenes during the step of horizontal translation of the clamp and is outside of the working area when the clamp grips in order to ensure its clamping.

9. The apparatus according to one or more of the preceding claims, **characterized in that** said fixing device comprises a pantograph.

10. The apparatus according to one or more of the preceding claims, **characterized in that** it comprises, at said end station, a device for unloading the panels which is provided with automatically extensible arms which can adjust automatically according to the height of said panel to be picked up, so as to limit the vertical stroke of said clamp body.
